# EUROPÄISCHE PATENTSCHRIFT

(11) **EP 2 333 926 B1**
(45) Veröffentlichungstag und Bekanntmachung des Hinweises auf die Patenterteilung: **04.05.2016**
(21) Anmeldenummer: 09014431.2
(22) Anmeldetag: 18.11.2009
(51) Int. Cl.: H02J 3/18, H02J 3/38

(54) **Windpark und Verfahren zum Betreiben eines Windparks**
Wind farm and method for operating a wind farm
Ferme à vent et procédé destiné au fonctionnement d'une ferme à vent

(30) Priorität: 22.09.2008 DE 102008048258
(43) Veröffentlichungstag der Anmeldung: 15.06.2011
(73) Patentinhaber: Senvion GmbH, 22297 Hamburg (DE)
(72) Erfinder: Fortmann, Jens, 13156 Berlin (DE); Koch, Friedrich, 47623 Kevelar (DE)
(74) Vertreter: Glawe, Delfs, Moll

(56) Entgegenhaltungen:
- WO-A2-2006/120033
- DE-A1- 19 620 906
- GB-A- 2 410 386
- US-B2- 6 924 565
- CARTWRIGHT P ET AL: "Co-ordinated voltage control strategy for a doubly-fed induction generator (DFIG)-based wind farm", IEE PROCEEDINGS: GENERATION, TRANSMISSION AND DISTRIBUTION, INSTITUTION OF ELECTRICAL ENGINEERS, GB, Bd. 151, Nr. 4, 11. Juli 2004 (2004-07-11) , Seiten 495-502, XP006022248, ISSN: 1350-2360, DOI: 10.1049/IP-GTD:20040581

## Beschreibung

Die Erfindung betrifft ein Verfahren zum Betreiben eines Windparks, bei dem die in dem Windpark erzeugte elektrische Energie über ein windparkinternes Netz zu einer Übergabestation transportiert wird. Vor der Übergabe an ein externes Netz wird die elektrische Energie auf eine Spannung transformiert wird, die um ein wählbares Übersetzungsverhältnis höher ist als die Spannung in dem windparkinternen Netz. Die Erfindung betrifft ferner einen Windpark mit einer Übergabestation, an der in dem Windpark erzeugte elektrische Energie von einem windparkinternen Netz an ein externes Netz übergeben wird. Der Windpark umfasst einen Stufenschalter zum Einstellen des Übersetzungsverhältnisses zwischen der Spannung in dem windparkinternen Netz und der Spannung in dem externen Netz sowie einen Windparkregler, der dem Stufenschalter ein Übersetzungsverhältnis vorgibt

In Windparks wird die von den Windenergieanlagen erzeugte elektrische Energie üblicherweise über ein Mittelspannungsnetz mit einer Spannung von beispielsweise 20 kV zu einer Übergabestation geleitet. Für die Übergabe an das externe Netz, das in der Regel ein Hochspannungsnetz ist, wird die elektrische Energie mit einem Transformator auf eine Spannung von beispielsweise 110 kV gebracht. Ändert sich die Spannung im Hochspannungsnetz, kann die Spannung im Mittelspannungsnetz dadurch konstant gehalten werden, dass das Übersetzungsverhältnis zwischen der Hochspannung und der Mittelspannung verändert wird. Dies ist im Stand der Technik bekannt.

Windenergieanlagen sind bei der Stromerzeugung bekanntermaßen davon abhängig, dass die elektrische Energie mit einer bestimmten Spannung an das windparkinterne Netz abgegeben werden kann, wobei diese Spannung nur leicht von der Nennspannung abweichen darf. Liegt die Spannung unterhalb der Nennspannung, ist eine höhere Stromstärke erforderlich, um dennoch Nennleistung abgeben zu können. Die höheren Stromstärken können zu einer erhöhten Belastung von elektrischen Komponenten der Windenergieanlage wie Generator, Kabel, Transformator führen. Um eine Überlastung zu vermeiden, wird in einer solchen Situation normalerweise zunächst die Blindleistung begrenzt, bevor es zu einer Begrenzung der Wirkleistung kommt. Liegt hingegen die Spannung im windparkinternen Netz oberhalb der Nennspannung, so kann dies ebenfalls zu einer Überlastung von Komponenten der Windenergieanlage führen, beispielsweise indem der Umrichter überlastet wird. Die Spannung muss also innerhalb eines schmalen Bandes oberhalb und unterhalb der Nennspannung liegen, damit die Windenergieanlage Nennleistung abgeben kann und zugleich die Blindleistungsvorgaben erfüllen kann. Selbst wenn die Windenergieanlage noch innerhalb des zulässigen Bereichs betrieben wird, steigt die Belastung der Windenergieanlage an, wenn der Betrieb in der Nähe von Systemgrenzen stattfindet. Ein Betrieb am Rande der Systemgrenzen führt zu einer sinkenden Lebensdauer der Windenergieanlage und einem steigenden Wartungsaufwand.

Ausgehend vom eingangs genannten Stand der Technik liegt der Erfindung die Aufgabe zu Grunde, ein Verfahren zum Betreiben eines Windparks sowie einen Windpark vorzustellen, mit denen es möglich wird, die Belastung von Windenergieanlagen des Windparks zu vermindern. Die Aufgabe wird gelöst durch die Merkmale der unabhängigen Ansprüche. Vorteilhafte Ausführungsformen finden sich in den Unteransprüchen.

Erfindungsgemäß wird bei dem Verfahren die elektrische Auslastung einer Windenergieanlage des Windparks ermittelt und das Übersetzungsverhältnis zwischen der Spannung im windparkinternen Netz und der Spannung im externen Netz in Abhängigkeit von der elektrischen Auslastung der Windenergieanlage eingestellt.

Zunächst werden einige Begriffe erläutert. Ein Windpark umfasst mindestens eine, in der Regel jedoch mehrere Windenergieanlagen, in denen Rotationsenergie eines Rotors über einen Generator in elektrische Energie umgewandelt wird. Über ein windparkinternes Netz wird die elektrische Energie zu einer Übergabestation geleitet, dort auf eine höhere Spannung transformiert und an ein externes Netz übergeben. Das Verhältnis zwischen der Spannung im externen Netz und der Spannung im windparkinternen Netz wird als Übersetzungsverhältnis bezeichnet. Das Übersetzungsverhältnis ist im Rahmen der Erfindung wählbar, kann also in mehreren Schritten oder stufenlos verändert werden.

Im Stand der Technik sind Stufenschalter als Mittel bekannt, um das Übersetzungsverhältnis zu ändern. So werden Stufenschalter in den Netzen der großen Energieversorger dazu verwendet, Spannungsschwankungen in den Hochspannungsnetzen zu ermöglichen, ohne dass damit zugleich Spannungsschwankungen auf Mittelspannungsebene verbunden sind. In Bezug auf Windenergieanlagen ist es in WO 2006/120033 A2 vorgeschlagen worden, Stufenschalter einzusetzen, um Blindleistungsvorgaben des externen Netzes umzusetzen. Wird der Stufenschalter betätigt, ändert sich die Spannung des windparkinternen Netzes. Die Regler der einzelnen Windenergieanlagen gleichen die Spannungsänderung dadurch aus, dass sie den Anteil an Blindleistung entweder erhöhen oder vermindern.

Die GB2410386 offenbart eine Windenergieanlage mit doppelt gespeister Asynchronmaschine, die über einen Netztransformator mit Laststufenschalter an das übergeordnete Netz angeschlossen ist. Schalthandlungen mittels des Stufenschalters werden erst dann durchgeführt, wenn eine Sollwertvorgabe nicht mehr mittels der Konverter der Windenergieanlage eingehalten werden kann.

Die elektrische Auslastung einer Windenergieanlage ist die Auslastung, die dadurch bewirkt wird, dass elektrische Energie durch Komponenten der Windenergieanlage fließt. Beispielsweise kann die elektrische Auslastung anhand des Verhältnisses zwischen aktueller Scheinleistung (bzw. Scheinstrom) und maximal möglicher Scheinleistung (bzw. Scheinstrom) bestimmt werden.

Erfindungsgemäß wird die elektrische Auslastung beispielsweise dadurch bestimmt, dass der Arbeitspunkt der Windenergieanlage betrachtet wird und geprüft wird, wie viel Abstand der Arbeitspunkt zu Systemgrenzen der Windenergieanlage einhält. Ist beispielsweise am gegenwärtigen Arbeitspunkt die Spannung so hoch, dass der Umrichter droht zu übersteuern, so ist der Arbeitspunkt mit einer hohen elektrischen Auslastung verbunden. Ist hingegen die Spannung so niedrig, dass die elektrischen Komponenten der Windenergieanlage wie Generator, Kabel, Transformator sich durch die höhere Stromstärke erhitzen, liegt ebenfalls eine hohe elektrische Auslastung vor. Wird eine hohe elektrische Auslastung festgestellt, so kann mit dem erfindungsgemäßen Verfahren das Übersetzungsverhältnis verändert werden, was dazu führt, dass im windparkinternen Netz eine neue Spannung anliegt. Die Windenergieanlage kann die erzeugte elektrische Energie mit der neuen Spannung abgeben und erhält dadurch einen Arbeitspunkt, der mit einer geringeren elektrischen Auslastung verbunden ist. Die Belastung für die Windenergieanlage sinkt.

In einer vorteilhaften Ausführungsform wird die elektrische Auslastung der Windenergieanlage dadurch ermittelt, dass die Spannung U und eine Blindkomponente Q der in der Windenergieanlage erzeugten elektrischen Energie mit einem U-Q-Kennfeld verglichen werden, wobei Blindkomponente als Oberbegriff zu verstehen ist, der die verschiedenen Darstellungsmöglichkeiten wie Blindstrom, Blindleistung, Phasenwinkel etc. umfasst. Unter einem U-Q-Kennfeld ist folgendes zu verstehen. Der Generator einer Windenergieanlage erzeugt die elektrische Energie bei kleinen Spannungen, die zumeist zwischen 400 V und 6 kV liegen. Vor der Übergabe an das windparkinterne Netz wird die elektrische Energie mit einem zu der Windenergieanlage gehörigen Transformator auf eine mittlere Spannung von beispielsweise 20 kV gebracht. Durch den Transformator der Windenergieanlage wird sowohl die Wirkkomponente als auch die Blindkomponente der elektrischen Energie übertragen. Es ist bekannt, dass die Fähigkeit des Transformators zur Übertragung der Blindkomponente davon abhängt, mit welcher Spannung der Transformator betrieben wird. An einem Ende des zulässigen Spannungsbereichs kann die Windenergieanlage ohne Einschränkung kapazitive Blindkomponente erzeugen (übererregter Betrieb), während sie bei der Übertragung einer induktiven Blindkomponente (untererregter Betrieb) schneller an ihre Systemgrenzen stößt. Am anderen Ende des zulässigen Spannungsbereichs kann die Windenergieanlage gut eine induktive Blindkomponente erzeugen, während sie bei der Übertragung einer kapazitive Blindkomponente schneller an ihre Systemgrenzen stößt. Dieser Zusammenhang ist im Detail beschrieben in DE 10 2008 018 748. Betrachtet man ein aus dieser Erkenntnis abgeleitetes U-Q-Kennfeld, so fehlen im Vergleich zu der Rechteckform, die man erwarten würde, wenn die Fähigkeit zur Übertragung der Blindkomponente über den gesamten zulässigen Spannungsbereich gleich wäre, zwei Ecken. Die Form des U-Q-Kennfelds nähert sich dadurch an einen Rhombus an. Betrachtet man das U-Q-Kennfeld auf der Seite des windparkinternen Netzes, so ist bei hoher Spannung die Fähigkeit zur Einspeisung von kapazitiver Blindkomponente und bei niedriger Spannung die Fähigkeit zur Einspeisung von induktive Blindkomponente vermindert. Auf der Seite des Generators sind die Vorzeichen umgekehrt. Die Spannung U wird im Rahmen der Erfindung vorzugsweise auf der Seite des windparkinternen Netzes betrachtet, eine Betrachtung auf der Generatorseite ist jedoch ebenfalls möglich. Das U-Q-Kennfeld ändert sich je nachdem, wieviel Leistung die Windenergieanlage abgibt. So kann bei geringerer Wirkleistung ein größerer Anteil an Blindleistung eingespeist werden. Die rhombusähnliche Form des U-Q-Kennfelds bleibt aber erhalten.

Nimmt man den durch die Spannung U und die Blindkomponente Q definierten Arbeitspunkt der Windenergieanlage und vergleicht diesen mit dem U-Q-Kennfeld, so kann von einer geringen elektrischen Auslastung der Windenergieanlage ausgegangen werden, wenn der Arbeitspunkt von allen Grenzen des U-Q-Kennfelds weit entfernt ist. Die elektrische Auslastung wird größer, wenn sich der Arbeitspunkt einer Grenze des U-Q-Kennfelds annähert. Nähert sich der Arbeitspunkt dort an eine Grenze des U-Q-Kennfelds an, wo im Vergleich zum Rechteck eine Ecke fehlt, so wäre es die klassische Reaktion, die Blindkomponente Q zu vermindern und in Kauf zu nehmen, dass die Windenergieanlage die Blindleistungsvorgabe nicht mehr erfüllen kann. Im Rahmen der Erfindung kann stattdessen durch eine Änderung des Übersetzungsverhältnisses die Spannung im windparkinternen Netz geändert werden. Der Arbeitspunkt der Windenergieanlage entfernt sich dadurch von den Grenzen des U-Q-Kennfelds und die elektrische Auslastung der Windenergieanlage wird vermindert. Der so gewonnene Spielraum kann genutzt werden, um die Blindkomponente Q zu erhöhen, so dass die Blindleistungsvorgabe wieder erfüllt wird.

Anstatt lediglich den Abstand des Arbeitspunkts zu den Grenzen des U-Q-Kennfelds zu betrachten, kann in dem Kennfeld für jeden Arbeitspunkt abgelesen werden, ob es möglich wäre, bei Bedarf zusätzliche kapazitive oder induktive Blindkomponente zur Verfügung zu stellen. Die Fähigkeit, zusätzliche kapazitive bzw. induktive Blindkomponente bereitstellen zu können, wird als Blindleistungsreserve bezeichnet. Von der Erfindung umfasst ist der Gedanke, das Übersetzungsverhältnis zwischen der windparkinternen Spannung und der Spannung des externen Netzes in Abhängigkeit davon zu ändern, ob der Arbeitspunkt der Windenergieanlage ausreichend Blindleistungsreserve bietet.

Ein Windpark umfasst normalerweise eine Mehrzahl von Windenergieanlagen. Wird das Übersetzungsverhältnis zwischen der windparkinternen Spannung und der Spannung des externen Netzes verändert, so betrifft dies nicht eine einzelne Windenergieanlage, sondern alle Windenergieanlagen des Windparks. Führt man das erfindungsgemäße Verfahren so durch, dass das Übersetzungsverhältnis bereits dann geändert wird, wenn bei einer einzelnen Windenergieanlagen eine hohe elektrische Auslastung gegeben ist, so mag dies zwar die elektrische Auslastung dieser Windenergieanlage vermindern, zugleich wird aber unter Umständen die elektrische Auslastung der übrigen Windenergieanlagen erhöht. Vorzugsweise wird das Übersetzungsverhältnis erst dann geändert, wenn die elektrische Auslastung bei einer Mehrzahl oder einer vorgegebenen Anzahl von Windenergieanlagen des Windparks vorgegebene Grenzen überschritten hat.

Stufenschalter, die zur Änderung des Übersetzungsverhältnisses verwendet werden können, unterliegen hohem Verschleiß und überstehen nur eine begrenzte Anzahl von Schaltvorgängen. Erstrebenswert ist es deswegen, das Übersetzungsverhältnis nur dann zu ändern, wenn der Gewinn durch die Entlastung der Windenergieanlagen höher ist als der Verlust durch den Verschleiß des Stufenschalters. Erreicht werden kann dies beispielsweise dadurch, dass der Stufenschalter erst dann betätigt wird, wenn eine strengere Bedingung erfüllt ist. Beispielsweise kann die Bedingung sein, dass eine erhöhte elektrische Auslastung über einen vorgegebenen Zeitraum von beispielsweise mehr als 1 Minute oder mehr als 10 Minuten gemeldet sein muss. Andere Kriterien könnten es sein, dass der Windpark insgesamt nicht mehr in der Lage ist, die geforderte Blindleistung zu liefern, oder dass Temperaturgrenzen in den Windenergieanlagen überschritten werden. Ferner kann das Schalten des Stufenschalters davon abhängig gemacht werden, ob in einer vorangegangenen Zeitspanne von beispielsweise 30 Minuten, 24 Stunden oder einem Monat bereits ein Schaltvorgang oder eine bestimmte Zahl von Schaltvorgängen stattgefunden hat.

Die Entscheidung, ob der Stufenschalter geschaltet wird, kann insbesondere in Abhängigkeit von den folgenden Kriterien getroffen werden. Es kann ein Mittelwert der Spannung über die Zeit betrachtet werden und der Stufenschalter nur dann geschaltet werden, wenn der Mittelwert für eine vorgegebene Zeitspanne oberhalb eines vorgegebenen Grenzwerts liegt. Dadurch kann verhindert werden, dass der Stufenschalter bei kurzen Spannungsschwankungen geschaltet wird. Ferner kann die Zeitspanne bis zur nächsten regelmäßigen Wartung der Windenergieanlage betrachtet werden. Geht man davon aus, dass ein Stufenschalter zwischen zwei Wartungen nur eine vorgegebene Zahl von Schaltvorgängen durchführen kann, so kann jederzeit festgestellt werden, wieviele Schaltvorgänge bis zur nächsten Wartung noch möglich sind. Ist die Zeitspanne bis zur nächsten Wartung noch lang und stehen nur noch wenige Schaltvorgänge zur Verfügung, können die Kriterien, die einen Schaltvorgang auslösen, hochgesetzt werden und umgekehrt. Ferner kann das Auslösen eines Schaltvorgangs von einer Kosten-/Nutzen-Bewertung abhängig gemacht werden. Anhand der Zahl der Schaltvorgänge zwischen zwei Wartungen und den Kosten einer Wartung kann einfach ausgerechnet werden, welche Kosten mit einem einzelnen Schaltvorgang verbunden sind. Ebenfalls verfügbar ist die Information, welche Kosten beispielsweise dadurch entstehen, dass wegen hoher elektrischer Auslastung der Windenergieanlage die Leistungseinspeisung sinkt. Kostet ein Schaltvorgang z.B. EUR 25 und entstehen durch die verminderte Leistungseinspeisung in 15 Minuten Kosten von EUR 25, so ist ein Schaltvorgang dann wirtschaftlich sinnvoll, wenn dadurch die Windenergieanlage für einen Zeitraum von mehr als 15 Minuten mit voller anstatt mit verminderter Leistungseinspeisung betrieben werden kann. Die Entscheidung über ein Betätigen des Stufenschalters kann von einem oder von mehreren der vorstehenden Kriterien abhängig gemacht werden. Es kann ein Bewertungsmodul im Windparkregler vorgesehen sein, das die Entscheidung trifft. Das Bewertungsmodul kann außerdem dazu ausgelegt sein, in Abhängigkeit von der derzeitigen Wirkleistungsabgabe und/oder einem Spannungsmittelwert und/oder einer Zustandsgröße des Stufenschalters ein geeignetes U-Q-Kennfeld aus einer Mehrzahl von U-Q-Kennfeldern auszuwählen.

Ist die elektrische Auslastung von Windenergieanlagen des Windpark sehr hoch, ist also der Arbeitspunkt sehr weit vom gewünschten Bereich entfernt, so kann der Stufenschalter das Übersetzungsverhältnis in einem Schaltvorgang um mehrere Stufen ändern.

Umgekehrt muss es nicht zwingend eine Voraussetzung für eine Änderung des Übersetzungsverhältnisses sein, dass eine oder mehrere Windenergieanlagen an ihre Leistungsgrenzen stoßen. Wenn die Windenergieanlagen so weit von ihrem Systemgrenzen entfernt sind, dass eine Erhöhung der Spannung möglich ist, ohne dass die Systemgrenzen erreicht werden, so kann die Spannungserhöhung zu dem Zweck durchgeführt werden, die elektrischen Verluste zu vermindern und den Wirkungsgrad zu erhöhen.

Wird das Übersetzungsverhältnis umgeschaltet und ändert sich dadurch die Spannung im windparkinternen Netz, so versucht die Steuerung der Windenergieanlage unter Umständen, der Spannungsänderung entgegenzuwirken und die Spannung wieder auf den alten Wert zu regeln. Eine solche Reaktion der Windenergieanlage ist in den meisten Fällen unerwünscht. Die Reaktion kann vermieden werden, wenn der Windenergieanlage beim Umschalten des Übersetzungsverhältnisses neue Sollwerte für die Spannung und/oder die Blindkomponente vorgegeben werden. Die Windenergieanlage wird dadurch mit der Information versorgt, dass die Änderung im windparkinternen Netz gewünscht ist und dass ihr nicht entgegengesteuert werden soll.

In geringerem Umfang als mit einem Stufenschalter kann das Spannungsniveau in dem windparkinternen Netzes auch durch Maßnahmen der aktiven oder passiven Kompensation beeinflusst werden. Ein Beispiel dafür ist das Zuschalten oder Abschalten von Kapazitäten in dem windparkinternen Netz. Sinnvoll ist es, das erfindungsgemäße Verfahren mit der Steuerung der Kompensation derart zu verbinden, dass geringfügige Änderungen zunächst über die windparkinterne Kompensation herbeigeführt werden und dass der Stufenschalter nur betätigt wird, wenn eine große Änderung erforderlich ist.

Der erfindungsgemäße Windpark ist zur Durchführung des erfindungsgemäßen Verfahrens ausgelegt. Es ist vorgesehen, dass die Windparkregelung dem Stufenschalter das Übersetzungsverhältnis in Abhängigkeit von der elektrischen Auslastung einer Windenergieanlage vorgibt. Indem das passende Übersetzungsverhältnis vorgegeben wird und dadurch die Spannung in dem windparkinternen Netz eingestellt wird, können die Windenergieanlagen des Windparks in einem Arbeitspunkt betrieben werden, in dem die Windenergieanlagen unter einer geringen Belastung stehen.

Vorzugsweise ist ein Kennfeldspeicher vorgesehen, in dem ein von der Rechteckform abweichendes U-Q-Kennfeld hinterlegt ist. Anhand des U-Q-Kennfelds kann festgestellt werden, wie hoch die elektrische Auslastung ist, unter der eine Windenergieanlage steht. Dazu kann direkt bei der Windenergieanlage ein Logikmodul vorgesehen sein, das die Spannung U und die Blindkomponente Q der in das windparkinterne Netz eingespeisten elektrischen Energie mit dem U-Q-Kennfeld vergleicht. Führt der Vergleich zu dem Ergebnis, dass die Windenergieanlage unter einer erhöhten elektrischen Auslastung steht, so kann eine entsprechende Meldung an den Windparkregler abgesetzt werden. Im Windparkregler kann überprüft werden, ob die Bedingungen für ein Umschalten des Stufenschalters vorliegen. Die Bedingung kann beispielsweise sein, dass mehr als eine oder mehr als die Hälfte der Windenergieanlagen des Windparks eine erhöhte Auslastung melden.

Alternativ oder zusätzlich kann am Windparkregler ein Logikmodul vorgesehen sein, das die Spannung U und die Blindkomponente Q des windparkinternen Netzes mit dem U-Q-Kennfeld vergleicht. Verschiedene Faktoren können dazu führen, dass die Spannung im windparkinternen Netz nicht überall gleich ist. Die Werte für die Spannung U und die Blindkomponente Q an der Übergabestation zum externen Netz müssen also nicht unbedingt mit den entsprechenden Werten an den einzelnen Windenergieanlagen übereinstimmen. Trotzdem kann aus zentralen Messwerten über die Spannung U und die Blindkomponente Q im windparkinternen Netz eine Aussage über die elektrische Auslastung der einzelnen Windenergieanlagen abgeleitet werden und es können Bedingungen festgelegt werden, unter denen der Stufenschalter betätigt wird, um das Übersetzungsverhältnis zu ändern. Ein Umschalten des Stufenschalters kann beispielsweise dann vorgesehen sein, wenn der Windpark von außen eine neue Blindleistungsvorgabe erhält und bereits anhand eines zentralen Vergleichs mit dem U-Q-Kennfeld festgestellt werden kann, dass die Windenergieanlagen wegen zu hoher elektrischer Auslastung nicht in der Lage sein werden, die neue Blindleistungsvorgabe zu erfüllen.

Der Stufenschalter kann separat angeordnet sein oder baulich mit dem Transformator verbunden sein. Um schnell reagieren zu können, wenn die Arbeitspunkte der Windenergieanlagen sehr weit von den gewünschten Punkten entfernt liegen, kann der Stufenschalter so ausgelegt sein, dass er bei Bedarf in einem Schaltvorgang einen Wechsel über mehrere Schaltstufen durchführt. Für die Feineinstellung der Spannung kann im windparkinternen Netz zusätzlich eine von den Windenergieanlagen unabhängige Blindleistungsquelle vorgesehen sein, die zugeschaltet und abgeschaltet werden kann. Die Blindleistungsquelle kann gesteuert oder geregelt sein. Es können auch mehrere Kombinationen aus Stufenschalter und Transformator parallel geschaltet sein, um eine Redundanz zu erzeugen.

Es kann vorgesehen sein, dass die elektrische Energie zunächst über eine Verbindungsleitung zu dem externen Netz transportiert wird. Dies kommt beispielsweise in Betracht, wenn der Windpark ein Offshore-Windpark ist und die elektrische Energie über die Verbindungsleitung zur Küste geleitet wird oder wenn der Windpark eine große Entfernung zur nächsten Anschlussstelle des öffentlichen Energieverteilungsnetzes hat. Es kann ein erster Stufenschalter an einem ersten Ende der Verbindungsleitung und ein zweiter Stufenschalter an einem zweiten Ende der Verbindungsleistung angeordnet sein, wobei beide Stufenschalter durch den Windparkregler gesteuert oder geregelt werden. Die Spannung im windparkinternen Netz kann dadurch unabhängig von der Spannung im öffentlichen Energieverteilungsnetz gewählt werden und es wird möglich, einem Spannungsabfall über der Verbindungsleitung durch Schalten eines der beiden Stufenschalter entgegenzuwirken.

Die Erfindung wird nachfolgend unter Bezugnahme auf die beigefügten Zeichnungen anhand einer vorteilhaften Ausführungsform beispielhaft beschrieben. Es zeigen:
- Fig. 1: einen erfindungsgemäßen Windpark;
- Fig. 2: ein U-Q-Kennfeld einer Windenergieanlage des erfindungsgemäßen Windparks;
- Fig. 3, 4: beispielhafte Arbeitspunkte von Windenergieanlagen anhand des U-Q-Kennfeld der Fig. 2; und
- Fig. 5: ein alternatives U-Q-Kennfeld.

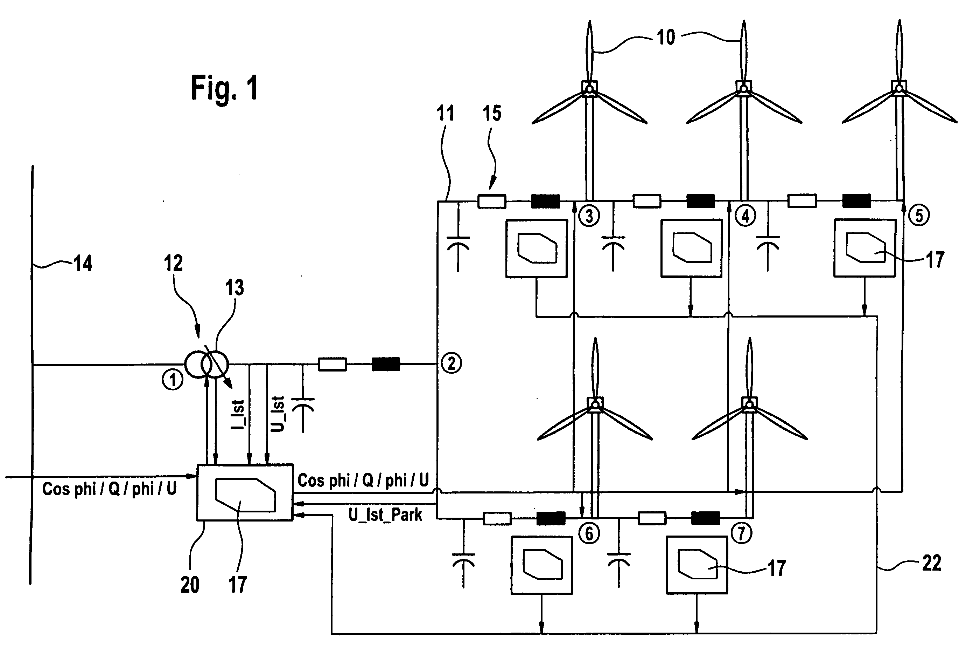

Ein Windpark in Fig. 1 umfasst eine Mehrzahl von Windenergieanlagen 10. Jede Windenergieanlage 10 umfasst einen Rotor, dessen Rotation über einen nicht dargestellten Generator in elektrische Energie umgewandelt wird. Die von dem Generator mit einer Spannung von z.B. 690 V erzeugte elektrische Energie wird bereits in der Windenergieanlage 10 auf eine Mittelspannung von 20 kV transformiert. Mit der Spannung von 20 kV wird die elektrische Energie in ein windparkinternes Netz 11 eingespeist und über das windparkinterne Netz 11 zu einer Übergabestation 12 geleitet. Die Abschnitte des windparkinternen Netzes 11 sind in Form von Ersatzschaltbildern 15 dargestellt, um anzudeuten, dass sie jeweils auch die Wirkung einer Induktivität, einer Kapazität und eines Widerstands haben. In der Übergabestation 12 ist ein Transformator mit einem Stufenschalter 13 vorgesehen, mit dem die elektrische Energie von der 20 kV-Mittelspannung auf eine Hochspannung von 110 kV übersetzt wird.

In der Übergabestation 12 wird die elektrische Energie an ein externes Netz 14 übergeben. Das externe Netz ist normalerweise ein öffentliches Energieverteilungsnetz, über das die elektrische Energie zu den Verbrauchern verteilt wird. Insbesondere bei einem Offshore-Windpark kann die elektrische Energie zunächst über einen Stufenschalter an eine Verbindungsleitung übergeben werden, bevor sie über einen weiteren, am anderen Ende der Verbindungsleitung angeordneten Stufenschalter an das externe Netz übergeben wird. Es kann vorgesehen sein, dass die beiden Stufenschalter bei der Durchführung des erfindungsgemäßen Verfahrens aufeinander abgestimmt geschaltet werden, wobei für die Erfindung beide Stufenschalter als zum Windpark gehörig angesehen werden. Dies ermöglicht es, die Spannung im windparkinternen Netz 11 von der Spannung des öffentlichen Energieverteilungsnetzes zu entkoppeln und die Spannung des windparkinternen Netzes 11 unabhängig von der Spannung im öffentlichen Energieverteilungsnetz zu wählen. Ferner wird es möglich, einer Spannnungsänderung, die an nur einem Ende der Verbindungsleitung auftritt, durch Betätigen eines der beiden Stufenschalter entgegenzuwirken.

Ein Windparkregler 20 wird mit verschiedenen Informationen über den Zustand des Windparks versorgt. Die Informationen umfassen die tatsächliche Spannung und den tatsächlichen Strom im windparkinternen Netz 11, Vorgaben von außen für die Spannung und die Blindleistung, mit der die elektrische Energie an das externe Netz 14 übergeben werden soll, sowie Informationen über den Zustand der Windenergieanlagen 10. Der Windparkregler 20 verarbeitet diese Informationen und errechnet daraus Vorgaben, die an die Komponenten des Windparks übermittelt werden. So erhält der Stufenschalter 13 eine Vorgabe für das Übersetzungsverhältnis. Den Windenergieanlagen 10 werden Vorgaben für die Spannung und die Blindleistung gemacht.

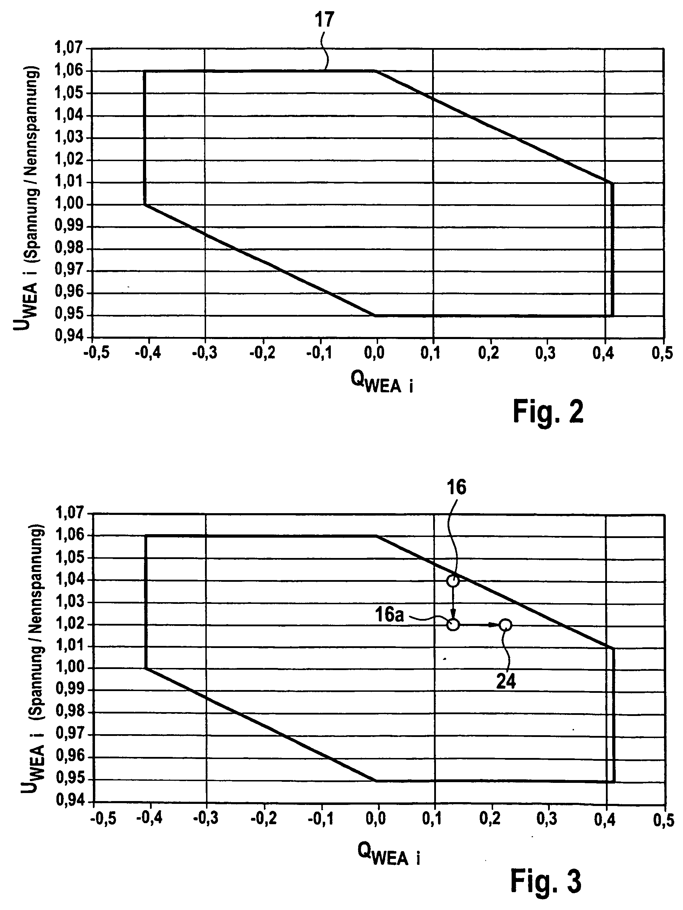

Fig. 2 zeigt ein U-Q-Kennfeld 17, das den Arbeitsbereich anzeigt, innerhalb dessen eine Windenergieanlage 10 elektrische Energie in das windparkinterne Netz 11 einspeisen kann. In dem U-Q-Kennfeld 17 ist auf der einen Achse in normierten Einheiten die Spannung U angegeben, wobei ein Wert von 1,00 Nennspannung entspricht. Auf der anderen Achse ist ebenfalls in normierten Einheiten die Blindkomponente Q aufgetragen, wobei Strom und Spannung bei einem Wert von Q = 0,0 in Phase sind. Bei Q = 0,0 wird also nur Wirkleistung übertragen, die Blindkomponente ist 0. Bei positiven Werten Q wird kapazitive Blindleistung eingespeist, bei negativen Werten Q induktive Blindleistung. Wäre die Windenergieanlage über den gesamten zulässigen Spannungsbereich zwischen 0,95 und 1,06 in gleichem Maße in der Lage, Blindleistung zur Verfügung zu stellen, so hätte das U-Q-Kennfeld 17 die Form eines Rechtecks. Wie oben erläutert ist jedoch bei niedrigen Spannungen die Fähigkeit zum Einspeisen von induktiver Blindleistung vermindert. Hingegen ist bei Spannungen am oberen Ende des zulässigen Bereichs die Fähigkeit zum Einspeisen von kapazitiver Blindleistung vermindert. Im Vergleich zu einem Rechteck fehlen deswegen die Ecke links unten und die Ecke rechts oben, das Kennfeld ist der Form eines Rhombus angenähert.

Ermittelt man die Spannung U und die Blindkomponente Q, mit der die Windenergieanlage 10 elektrische Energie in das windparkinterne Netz 11 einspeist, so lässt sich in dem U-Q-Kennfeld 17 der Fig. 2 der Arbeitspunkt einzeichnen, an dem die Windenergieanlage 10 arbeitet. Allgemein deutet ein Arbeitspunkt in der Mitte des U-Q-Kennfelds 17 eher auf eine geringe elektrische Auslastung der Windenergieanlage 10 hin. Ein Arbeitspunkt nahe der Grenze des U-Q-Kennfelds 17 ist ein Hinweis auf eine hohe elektrische Auslastung der Windenergieanlage 10. Die dargestellte Figur gilt für eine hohe oder normale Wirkleistungsabgabe. Für den Bereich der niedrigen Wirkleistungsabgabe würde eine andere Grenzfunktion herangezogen werden, bei der z.B. der Arbeitsbereich des U-Q-Diagramms nach links und rechts vergrößert sind.

In dem U-Q-Kennfeld der Fig. 3 ist ein möglicher Arbeitspunkt 16 einer Windenergieanlage 10 eingezeichnet. Die Spannung U liegt bei 1,04 der Nennspannung und es wird so viel kapazitive Blindleistung eingespeist, dass der Arbeitspunkt direkt an der Grenze des U-Q-Kennfelds liegt. Der Arbeitspunkt 16 kann beibehalten werden, wenn die Windenergieanlage 10 gerade soviel Blindleistung liefern kann, wie gefordert ist.

In einem anderen Fall müsste die Windenergieanlage 10 eigentlich mehr Blindleistung liefern, um die Blindleistungsvorgabe zu erfüllen, wegen hoher elektrischer Auslastung kann sie dies jedoch nicht. Eine Erhöhung der Blindleistungskomponente hätte einen Arbeitspunkt außerhalb U-Q-Kennfelds und damit außerhalb des zulässigen Bereichs zur Folge. In diesem Fall macht die Windenergieanlage eine Meldung über ihre hohe elektrische Auslastung an den Windparkregler 20. Der Windparkregler 20 kann gemäß dem erfindungsgemäßen Verfahren reagieren, indem der Stufenschalter 13 um eine Stufe geschaltet wird, so dass die Spannung im windparkinternen Netz 11 absinkt. Der Arbeitspunkt 16 wird zum Arbeitspunkt 16a.

Der Regler der Windenergieanlage stellt fest, dass die elektrische Auslastung der Windenergieanlage am Arbeitspunkt 16a im Vergleich zum Arbeitspunkt 16 gesunken ist. Sollte die kapazitive Blindleistung am Arbeitspunkt 16a nicht ausreichen, so würde der Regler der Windenergieanlage den Arbeitspunkt 24 einstellen. Am Arbeitspunkt 24 ist die Windenergieanlage also anders als am Arbeitspunkt 16 in der Lage, einer Forderung nach erhöhter kapazitiver Blindleistung nachzukommen. Zugleich ist die elektrische Auslastung am Arbeitspunkt 24 geringer als am Arbeitspunkt 16, weil der Arbeitspunkt 24 noch einen Abstand zu den Grenzen des U-Q-Kennfelds hat. Durch die erfindungsgemäße Betätigung des Stufenschalters 13 wird also der Arbeitspunkt der Windenergieanlage zunächst so verschoben, dass sich die elektrische Auslastung verringert. Ein Teil des dadurch gewonnenen Spielraums wird genutzt, um mehr kapazitive Blindleistung einzuspeisen.

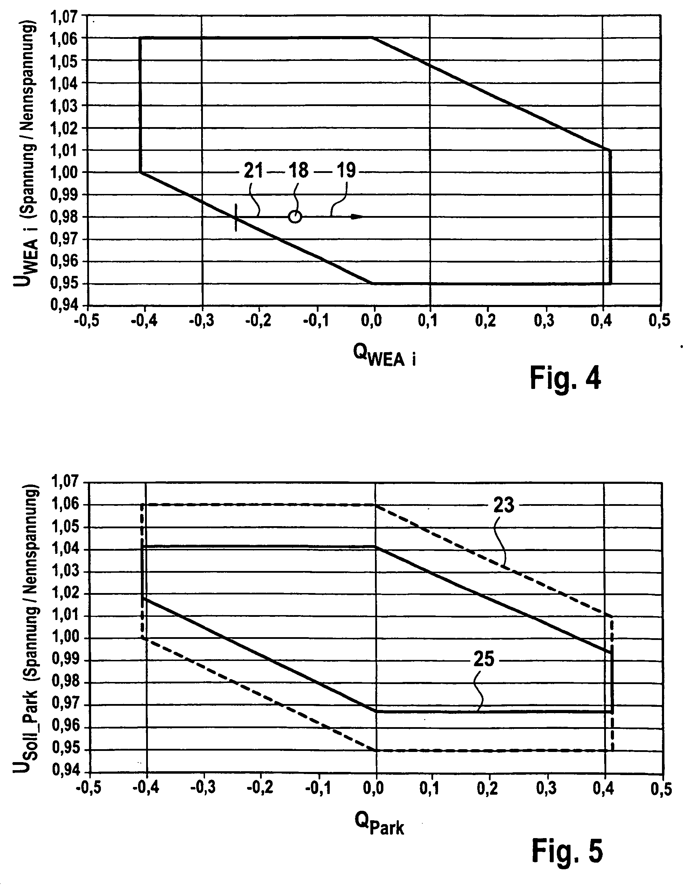

Bei dem in Fig. 4 gezeigten Arbeitspunkt 18 liegt die Spannung U bei 98% der Nennspannung und es wird induktive Blindleistung in das windparkinterne Netz 11 eingespeist. Sollte sich die Blindleistungsvorgabe dahingehend ändern, dass die Windenergieanlage 10 weniger induktive Blindleistung einspeisen soll als bisher, so könnte die Windenergieanlage dieser Vorgabe ohne weiteres nachkommen. Der Regler der Windenergieanlage würde den Arbeitspunkt 18 wie mit dem Pfeil 19 angedeutet nach rechts verschieben. Eine Verminderung der eingespeisten Blindleistung bis zur Achse Q = 0,0 ist jederzeit möglich.

Wird umgekehrt mehr induktive Blindleistung gefordert, so muss der Regler der Windenergieanlage den Arbeitspunkt 18 weiter nach links verschieben. Dies ist in gewissen Grenzen möglich, weil der Arbeitspunkt 18 einen Abstand zur Grenze des U-Q-Kennfelds hat. Der mit 21 gekennzeichnete Abstand zwischen dem Arbeitspunkt 18 und der Grenze des U-Q-Kennfelds gibt die Blindleistungsreserve an, die die Windenergieanlage am Arbeitspunkt 18 noch hat. Ist die Blindleistungsreserve zu gering, um die zu erwartenden Vorgaben an induktive Blindleistung zu erfüllen, so kann eine entsprechende Meldung an den Windparkregler 20 gemacht werden.

In dem Windpark der Fig. 1 ist in jeder Windenergieanlage 10 ein U-Q-Kennfeld 17 hinterlegt. Über eine Datenleitung 22 erhält der Windparkregler 20 von jeder Windenergieanlage 10 eine Meldung, wenn die Windenergieanlage 10 anhand des U-Q-Kennfelds 17 eine erhöhte elektrische Auslastung feststellt. Da der Stufenschalter 13 starkem Verschleiß unterliegt und eine übermäßige Zahl von Schaltvorgängen deswegen vermieden werden soll, wird bei dem erfindungsgemäßen Verfahren nicht sofort der Stufenschalter 13 betätigt, nur weil eine einzelne Windenergieanlage eine hohe elektrische Auslastung meldet. Vielmehr werden dem Windparkregler 20 geeignete Kriterien vorgegeben, anhand derer entschieden werden kann, ob die Einsparungen durch die Verminderung der elektrischen Auslastung der Windenergieanlagen 10 größer ist als der Verlust durch den Verschleiß des Stufenschalters 13.

Der Windpark der Fig. 1 umfasst fünf Windenergieanlagen 10. Ein Betätigen des Stufenschalters 13 kann beispielsweise dann angezeigt sein, wenn der Windparkregler 20 von drei der fünf Windenergieanlagen eine Meldung erhöhter elektrischer Auslastung erhält. Alternativ kann der Stufenschalter 13 dann geschaltet werden, wenn von zwei der Windenergieanlagen die Meldung kommt, dass sie am aktuellen Arbeitspunkt sehr weit davon entfernt sind, die Blindleistungsvorgabe erfüllen zu können. Zusätzliche Kriterien leitet der Windparkregler 20 daraus ab, dass er die Istwerte der Spannung und der Blindkomponente im windparkinternen Netz 11 mit einem im Windparkregler 20 gespeicherten U-Q-Kennfeld 17 vergleicht.

Kommt der Windparkregler 20 zu dem Ergebnis, dass ein Betätigen des Stufenschalters 13 angezeigt ist, so gibt er dem Stufenschalter 13 eine entsprechende Vorgabe. Durch das Schalten des Stufenschalters 13 ändert sich das Übersetzungsverhältnis zwischen der Spannung des externen Netzes 14 und der Spannung des windparkinternen Netzes 11, was dazu führt, dass sich die Spannung im windparkinternen Netz 11 ändert. Gleichzeitig mit dem Kommando an den Stufenschalter 13 übermittelt der Windparkregler 20 an die Windenergieanlagen 10 neue Sollwerte für die Spannung und/oder die Blindleistung, damit die Windenergieanlagen darüber informiert sind, dass es sich um eine gewünschte Änderung im windparkinternen Netz handelt. Anderenfalls würden die Regler der Windenergieanlagen 10 versuchen, der Änderung entgegenzusteuern.

In Fig. 5 ist ein weiteres U-Q-Kennfeld gezeigt, das eine abgestufte Reaktion ermöglicht. Liegt der Arbeitspunkt im inneren Bereich 25 des U-Q-Kennfelds, der mit der durchgezogene Linie begrenzt ist, so ist die elektrische Auslastung der Windenergieanlage gering, es sind keine Maßnahmen erforderlich, um die elektrische Auslastung zu vermindern. Liegt der Arbeitspunkt im äußeren Bereich 23 des U-Q-Kennfelds, so ist die elektrische Auslastung der Windenergieanlage zwar erhöht, sie ist jedoch noch nicht so hoch, dass eine sofortige Reaktion erforderlich wäre. Für eine kurze Zeit kann die Windenergieanlage mit diesem Arbeitspunkt betrieben werden. Erst wenn für einen Zeitraum von beispielsweise mehr als 10 Minuten keine Rückkehr des Arbeitspunkt in den inneren Bereich 25 möglich ist, wird der Stufenschalter 13 betätigt. Liegt der Arbeitspunkt hingegen außerhalb des äußeren Bereichs 23, so ist die Windenergieanlage elektrisch überlastet und der Stufenschalter 13 wird sofort betätigt.

In einer alternativen Ausführungsform wird der Stufenschalter 13 nicht geschaltet, wenn der Arbeitspunkt im inneren Bereich 25 des U-Q-Kennfelds liegt. Liegt der Arbeitspunkt im äußeren Bereich 23 des U-Q-Kennfelds, wird der Stufenschalter 13 um eine Stufe geschaltet. Bei einem Arbeitspunkt außerhalb des äußeren Bereichs 23 wird der Stufenschalter 13 in einem Schaltvorgang um zwei Stufen geschaltet. In allen Fällen ermöglicht es das erfindungsgemäße Verfahren, die elektrische Auslastung der Windenergieanlagen zu vermindern.

## Patentansprüche

1. Verfahren zum Betreiben eines Windparks, bei dem in dem Windpark erzeugte elektrische Energie über ein windparkinternes Netz (11) zu einer Übergabestation (12) transportiert wird und bei dem die elektrische Energie vor der Übergabe an ein externes Netz (14) auf eine Spannung transformiert wird, die um ein wählbares Übersetzungsverhältnis höher ist als die Spannung in dem windparkinternen Netz (11), mit den Schritten:
a. Ermitteln einer elektrischen Auslastung einer Wind-energieanlage (10) des Windparks;
und **gekennzeichnet durch**
b. Einstellen des Übersetzungsverhältnis in Abhängigkeit von der elektrischen Auslastung der Windenergieanlage (10), wobei das Übersetzungsverhältnis in Abhängigkeit davon geändert wird, ob ein gegenwärtiger Arbeitspunkt der Windenergieanlage ausreichend Blindleistungsreserve bietet.

2. Verfahren nach Anspruch 1, **dadurch gekennzeichnet, dass** die elektrische Auslastung der Windenergieanlage (10) durch Vergleich von Spannung U und einer Blindkomponente Q der in der Windenergieanlage (10) erzeugten elektrischen Energie mit einem U-Q-Kennfeld (17) ermittelt wird.

3. Verfahren nach Anspruch 2, **dadurch gekennzeichnet, dass** anhand des U-Q-Kennfelds (17) eine Blindleistungsreserve (21) der Windenergieanlage (10) ermittelt wird.

4. Verfahren nach einem der Ansprüche 1 bis 3, **dadurch gekennzeichnet, dass** das Übersetzungsverhältnis nur dann geändert wird, wenn die elektrische Auslastung bei einer Mehrzahl von Windenergieanlagen (10) des Windparks eine vorgegebene Grenze überschritten hat.

5. Verfahren nach einem der Ansprüche 1 bis 4, **dadurch gekennzeichnet, dass** bei einer Änderung des Übersetzungsverhältnisses neue Sollwerte für die Spannung und/oder die Blindkomponente an die Windenergieanlagen (10) des Windparks vorgegeben werden.

6. Verfahren nach einem der Ansprüche 1 bis 5, **dadurch gekennzeichnet, dass** eine Feineinstellung des Spannungsniveaus in dem windparkinternen Netz (11) durch das Zuschalten oder Abschalten einer von den Windenergieanlagen (10) unabhängigen Blindleistungsquelle vorgenommen wird.

7. Windpark mit einer Übergabestation (12), an der in dem Windpark erzeugte elektrischen Energie von einem windparkinternen Netz (11) an ein externes Netz (14) übergeben wird, einem Stufenschalter (13) zum Einstellen des Übersetzungsverhältnisses zwischen der Spannung in dem windparkinternen Netz (11) und der Spannung in dem externen Netz (14) und einem Windparkregler (20), der dem Stufenschalter ein Übersetzungsverhältnis vorgibt, **dadurch gekennzeichnet, dass** der Windparkregler (20) dem Stufenschalter (13) das Übersetzungsverhältnis in Abhängigkeit von der elektrischen Auslastung einer Windenergieanlage (10) des Windparks vorgibt, wobei der Windparkregler (20) das Übersetzungsverhältnis in Abhängigkeit davon vorgibt, ob ein gegenwärtiger Arbeitspunkt der windenergieanlage (10) gausreichend Blindleistungsreserve bietet.

8. Windpark nach Anspruch 7, **dadurch gekennzeichnet, dass** ein Kennfeldspeicher vorgesehen ist und dass in dem Kennfeldspeicher ein U-Q-Kennfeld (17) hinterlegt ist.

9. Windpark nach Anspruch 8, **dadurch gekennzeichnet, dass** eine Windenergieanlage (10) des Windparks ein Logikmodul umfasst, das die Spannung U und die Blindkomponente Q der von der Windenergieanlage (10) abgegebenen elektrischen Energie mit dem U-Q-Kennfeld (17) vergleicht.

10. Windpark nach Anspruch 8 oder 9, **dadurch gekennzeichnet, dass** der Windparkregler (20) ein Logikmodul umfasst, das die Spannung U und die Blindkomponente Q des windparkinternen Netzes (11) mit dem U-Q-Kennfeld (17) vergleicht.

11. Windpark nach einem der Ansprüche 7 bis 10, **dadurch gekennzeichnet, dass** der Windparkregler (20) ein Bewertungsmodul umfasst, das anhand einer aktuellen Wirkleistungsabgabe und/oder eines Spannungsmittelwertes und/oder einer Zustandsgröße des Stufenschalters (13) darüber entscheidet, ob der Stufenschalter (13) umgeschaltet wird.

12. Windpark nach einem der Ansprüche 7 bis 11, **dadurch gekennzeichnet, dass** der Stufenschalter (13) dazu ausgelegt ist, in einem Schaltvorgang einen Wechsel über mehrere Schaltstufen durchzuführen.

13. Windpark nach einem der Ansprüche 7 bis 12, **dadurch gekennzeichnet, dass** zusätzlich eine eine von den Windenergieanlagen (10) unabhängige Blindleistungsquelle zum Beeinflussen der Spannung im windparkinternen Netz (11) vorgesehen ist.

14. Windpark nach einem der Ansprüche 7 bis 13, **dadurch gekennzeichnet, dass** der Windpark eine Verbindungsleitung umfasst, über die die elektrische Energie zu dem externen Netz (14) transportiert wird, mit einem ersten Stufenschalter zum Einstellen des Übersetzungsverhältnisses zwischen der Spannung in dem windparkinternen Netz (11) und der Verbindungsleitung sowie einem zweiten Stufenschalter zum Einstellen der Spannung zwischen der Verbindungsleitung und dem externen Netz wobei der erste Stufenschalter und der zweite Stufenschalter durch den Windparkregler (20) gesteuert/geregelt werden.

## Claims

1. A method for operation of a wind farm, in which electrical power which is produced in the wind farm is transported via a wind-farm-internal network (11) to a substation (12) and in which, before being transferred to an external network (14), the electrical power is transformed to a voltage which is higher by a selectable step-up ratio than the voltage in the wind-farm-internal network (11), having the following steps:
a. determination of an electrical load level on a wind energy installation (10) in the wind farm, and **characterized by**
b. adjustment of the step-up ratio as a function of the electrical load level on the wind energy installation (10), wherein the step-up ratio is adjusted dependent on a wattless component margin.

2. The method as claimed in claim 1, wherein the electrical load level on the wind energy installation (10) is determined by comparison of the voltage U and a wattless component Q of the electrical power produced in the wind energy installation (10) with a U-Q family of characteristics (17).

3. The method as claimed in claim 2, wherein a wattless component margin (21) of the wind energy installation (10) is determined on the basis of the U-Q family of characteristics (17).

4. The method as claimed in one of claims 1 to 3, wherein the step-up ratio is changed only when the electrical load level for a plurality of wind energy installations (10) in the wind farm has exceeded a predetermined limit.

5. The method as claimed in one of claims 1 to 4, wherein, when the step-up ratio changes, new nominal values are predetermined for the voltage and/or the wattless component for the wind energy installations (10) in the wind farm.

6. The method as claimed in one of claims 1 to 5, wherein a fine adjustment of the voltage level in the wind-farm-internal network (11) is carried out by connection or disconnection of a wattless-component source which is independent of the wind energy installations (10).

7. A wind farm having a substation (12) at which electrical power produced in the wind farm is transmitted from a wind-farm-internal network (11) to an external network (14), having a stepping switch (13) for adjustment of the step-up ratio between the voltage in the wind-farm-internal network (11) and the voltage in the external network (14), and having a wind farm regulator (20) which presets a step-up ratio on the stepping switch, wherein the wind farm regulator (20) presets the step-up ratio for the stepping switch (13) as a function of the electrical load level on a wind energy installation (10) in the wind farm, wherein the wind farm regulator (20) presets the step-up ratio dependent on a wattless component margin.

8. The wind farm as claimed in claim 7, wherein a family of characteristics memory is provided, and wherein a U-Q family of characteristics (17) is stored in the family of characteristics memory.

9. The wind farm as claimed in claim 8, **characterized in that** a wind energy installation (10) in the wind farm has a logic module which compares the voltage U and the wattless component Q of the electrical power emitted by the wind energy installation (10) with the U-Q family of characteristics (17).

10. The wind farm as claimed in claim 8 or 9, wherein the wind farm regulator (20) has a logic module which compares the voltage U and the wattless component Q of the wind-farm-internal network (11) with the U-Q family of characteristics (17).

11. The wind farm as claimed in one of claims 7 to 10, wherein the wind farm regulator (20) has an assessment module which uses an instantaneous real power output and/or a voltage mean value and/or a state variable of the stepping switch (13) to decide whether the stepping switch (13) is switched.

12. The wind farm as claimed in one of claims 7 to 11, wherein the stepping switch (13) is designed to carry out a change over a number of switching stages in one switching process.

13. The wind farm as claimed in one of claims 7 to 12, wherein a wattless component source, which is independent of the wind energy installations (10), is also provided in order to influence the voltage in the wind-farm-internal network (11).

14. The wind farm as claimed in one of claims 7 to 13, wherein the windfarm comprises a connecting line, via which electrical power is transported to the external network (14), with a first stepping switch for adjusting the step-up ratio between a voltage in the wind farm internal network (11) and the connecting line and with a second stepping switch for adjusting the step-up ration between the connecting line and the voltage in the external network (14), and wherein the first stepping switch and the second stepping switch are controlled/regulated by the wind farm regulator.

## Revendications

1. Procédé de fonctionnement d'une ferme à vent, dans lequel l'énergie électrique produite dans la ferme à vent est transportée à un poste de transfert (12) par le biais d'un réseau (11) interne à la ferme à vent, et dans lequel l'énergie électrique est, avant le transfert à un réseau externe (14), transformée en une tension qui est supérieure, selon un rapport de transformation sélectionnable, à la tension dans le réseau (11) interne à la ferme à vent, avec les étapes suivantes :
a. détermination d'une utilisation électrique d'une éolienne (10) de la ferme à vent ; et **caractérisé par**
b. le réglage du rapport de transformation en fonction de l'utilisation électrique de l'éolienne (10), le rapport de transformation étant modifié selon qu'un point de travail présent de l'éolienne offre ou non une réserve de puissance réactive suffisante.

2. Procédé selon la revendication 1, **caractérisé en ce que** l'utilisation électrique de l'éolienne (10) est déterminée par la comparaison de la tension U et d'une composante réactive Q de l'énergie électrique produite dans l'éolienne (10) avec un champ caractéristique U-Q (17).

3. Procédé selon la revendication 2, **caractérisé en ce que**, à l'aide du champ caractéristique U-Q (17), une réserve de puissance réactive (21) de l'éolienne (10) est déterminée.

4. Procédé selon l'une des revendications 1 à 3, **caractérisé en ce que** le rapport de transformation n'est modifié que quand l'utilisation électrique a dépassé une limite prédéfinie dans le cas d'une pluralité d'éoliennes (10) de la ferme à vent.

5. Procédé selon l'une des revendications 1 à 4, **caractérisé en ce que**, lors d'une variation du rapport de transformation, de nouvelles valeurs de consigne pour la tension et/ou pour la composante réactive sont prédéfinies à l'attention des éoliennes(10) de la ferme à vent.

6. Procédé selon l'une des revendications 1 à 5, **caractérisé en ce qu'**un réglage fin du niveau de tension dans le réseau (11) interne à la ferme à vent est entrepris par le branchement ou la coupure d'une source de puissance réactive indépendante des éoliennes (10).

7. Ferme à vent avec un poste de transfert (12) au niveau duquel l'énergie électrique produite dans la ferme à vent est transférée à partir d'un réseau (11) interne à la ferme à vent vers un réseau externe (14), avec un commutateur à plots (13) pour le réglage du rapport de transformation entre la tension dans le réseau (11) interne à la ferme à vent et la tension dans le réseau externe (14), et avec un régulateur de ferme à vent (20) qui prescrit un rapport de transformation au commutateur à plots, **caractérisée en ce que** le régulateur de ferme à vent (20) prescrit au commutateur à plots (13) le rapport de transformation en fonction de l'utilisation électrique d'une éolienne (10) de la ferme à vent, le régulateur de ferme à vent (20) prescrivant le rapport de transformation selon qu'un point de travail présent de l'éolienne (10) offre ou non une réserve de puissance réactive suffisante.

8. Ferme à vent selon la revendication 7, **caractérisée en ce qu'**il est prévu une mémoire de champ caractéristique, et **en ce qu'**un champ caractéristique U-Q (17) est enregistré dans la mémoire de champ caractéristique.

9. Ferme à vent selon la revendication 8, **caractérisée en ce qu'**une éolienne (10) de la ferme à vent comprend un module logique qui compare la tension U et la composante réactive Q de l'énergie électrique délivrée par l'éolienne (10) avec le champ caractéristique U-Q (17).

10. Ferme à vent selon la revendication 8 ou 9, **caractérisée en ce que** le régulateur de ferme à vent (20) comprend un module logique qui compare la tension U et la composante réactive Q du réseau (11) interne à la ferme à vent avec le champ caractéristique U-Q (17).

11. Ferme à vent selon l'une des revendications 7 à 10, **caractérisée en ce que** le régulateur de ferme à vent (20) comprend un module d'évaluation qui, à l'aide d'une fourniture de puissance active actuelle et/ou d'une valeur moyenne de tension et/ou d'une grandeur d'état du commutateur à plots (13), décide si le commutateur à plots (13) est commuté.

12. Ferme à vent selon l'une des revendications 7 à 11, **caractérisée en ce que** le commutateur à plots (13) est conçu pour effectuer, dans un processus de commutation, un changement portant sur plusieurs plots de commutation.

13. Ferme à vent selon l'une des revendications 7 à 12, **caractérisée en ce que**, en plus, une source de puissance réactive indépendante des éoliennes (10) est prévue pour agir sur la tension dans le réseau (11) interne à la ferme à vent.

14. Ferme à vent selon l'une des revendications 7 à 13, **caractérisée en ce que** la ferme à vent comprend une ligne de connexion par le biais de laquelle l'énergie électrique est transportée vers le réseau externe (14), avec un premier commutateur à plots pour le réglage du rapport de transformation entre la tension dans le réseau (11) interne à la ferme à vent et la ligne de connexion, ainsi qu'avec un deuxième commutateur à plots pour le réglage de la tension entre la ligne de connexion et le réseau externe, le premier commutateur à plots et le deuxième commutateur à plots étant commandés/régulés par le régulateur de ferme à vent (20).
